# EUROPÄISCHE PATENTSCHRIFT

(11) **EP 1 915 004 B1**
(45) Veröffentlichungstag und Bekanntmachung des Hinweises auf die Patenterteilung: **22.08.2018**
(21) Anmeldenummer: 06021660.3
(22) Anmeldetag: 16.10.2006
(51) Int. Cl.: H04W 48/10, H04W 8/24, H04W 48/14, H04W 48/18, H04W 88/10

(54) **SYSTEMÜBERGREIFENDER AUFWÄRTSKANAL FÜR DIE FUNKKOMMUNIKATION**
MULTISYSTEM UPLINK CHANNEL FOR RADIO COMMUNICATION
CANAL ASCENDENT MULTI-SYSTÈME DE COMMUNICATION RADIO

(43) Veröffentlichungstag der Anmeldung: 23.04.2008
(73) Patentinhaber: Nokia Solutions and Networks GmbH & Co. KG, 81541 Munich (DE)
(72) Erfinder: Luo, Jijun, Dr., 80797 München (DE); Pan, Jianming, Dr., 1220 Wien (AT); Slanina, Peter, 3441 Judenau (AT)
(74) Vertreter: Weidel, Gottfried

(56) Entgegenhaltungen:
- DE-C1- 19 734 933
- US-A- 5 412 375
- HABERLAND B ET AL: "Software Defined Radio: A Promising Technology for Multi-Standard Base Stations" ALCATEL TELECOMMUNICATIONS REVIEW, ALCATEL, PARIS, FR, Bd. 2/2005, 1. April 2005 (2005-04-01), Seiten 106-111, XP002387992 ISSN: 1267-7167

## Beschreibung

Die Arbeiten, die zu dieser Erfindung geführt haben, wurden gemäß der Finanzhilfevereinbarung Nr. 507995 im Zuge des Siebten Rahmenprogramms der Europäischen Gemeinschaft (RP7/2007-2013) gefördert.

Die Erfindung betrifft ein Verfahren zur Kommunikation per Funk, bei dem eine netzseitige Funkstation Organisationsinformationen einer Mehrzahl von Funkkommunikationssystemen ausstrahlt.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Derzeitige Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Ein weiteres Beispiel stellen Breitlen) zellularen, hierarchischen Funknetzen existieren drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Die stetig steigende Anzahl unterschiedlicher Funkkommunikationssysteme führt dazu, dass Teilnehmerstationen eine immer größere Anzahl dieser Systeme bzw. Standards unterstützen, und hierdurch einem Teilnehmer einen Zugang zu Kommunikationsnetzen in vielfältigster Weise ermöglichen. Zudem gehen Betreiber von Funkkommunikationssystemen zunehmend dazu über, ihren Kunden Systeme unterschiedlicher Standards zur Verfügung zu stellen, mit der Möglichkeit, zwischen diesen Systemen zu roamen. Dies kann jedoch nachteilig dazu führen, dass aufgrund der großen Auswahl verfügbarer Systeme, die zudem in der Regel in unterschiedlichen systemspezifischen Frequenzbändern arbeiten, der Zeitraum für einen Aufbau einer Verbindung durch eine Teilnehmerstation verlängert wird.

Um die wachsende Anzahl von Funkkommunikationssystemen für Teilnehmer bzw. Teilnehmerstationen übersichtlich zu gestalten, wird unter anderem in dem Dokument "Global Pilot Mechanism" Tdoc SMG2 UMTS 52/97, ETSI STC SMG2 UMTS adhoc, 8.-10. April 1997, Lulea, Schweden, S. 1 und 2, vorgeschlagen, einen weltweit einheitlichen Pilotkanal (Global Pilot Channel) auf einer einheitlichen Funkfrequenz einzuführen. Auf einem derartigen weltweiten Pilotkanal sollten Informationen über jeweils lokal verfügbare Funkzugangstechnologien sowie Pointer auf deren spektrale Lage übertragen werden, so dass eine Teilnehmerstation eine geeignete bzw. von ihr unterstützte Funkzugangstechnologie auswählen und darauf zugreifen kann. Unter Funkzugangstechnologien sind dabei unterschiedliche Standards, beispielsweise GSM und UMTS, zu verstehen, welche wiederum in unterschiedlichen Frequenzbändern operieren können. Die Aussendung des Pilotkanals kann nach obigem Dokument entweder von den Betreibern selbst, die entsprechend auch Informationen von konkurrierenden Betreibern aussenden müssten, oder aber von einer nicht näher spezifizierten nationalen Instanz, beispielsweise der Regulierungsbehörde, erfolgen.

Das Dokument DE 197 34 933 C1 offenbart ein Verfahren, eine Mobilfunkstation und ein Kommunikationssystem zum Anpassen an ein von einem Mobilfunknetz unterstütztes Luftschnittstellenzugangsverfahren. Der Erfindung liegt die Aufgabe zugrunde, Verfahren sowie entsprechende Vorrichtungen anzugeben, welche einen effizienten Einsatz eines systemübergreifenden Pilotkanals ermöglichen.

Diese Aufgabe wird durch ein Verfahren mit den Merkmalen des Anspruchs 1, sowie durch ein Verfahren und Vorrichtungen mit Merkmalen von nebengeordneten Ansprüchen gelöst. Vorteilhafte Ausgestaltungen und Weiterbildungen sind Gegenstand von Unteransprüchen.

Gemäß dem ersten erfindungsgemäßen Verfahren zur Kommunikation per Funk strahlt eine erste netzseitige Funkstation Informationen für eine Vielzahl von Teilnehmerstationen aus, wobei die Informationen Organisationsinformationen einer Mehrzahl von Funkkommunikationssystemen beinhalten. Die erste netzseitige Funkstation oder eine andere netzseitige Funkstation empfängt von einer Teilnehmerstation eine Nachricht, wobei die Nachricht in Bezug auf jedes der Mehrzahl von Funkkommunikationssystemen das teilnehmerstationsseitige Unvermögen zur Detektion eines für einen Verbindungsaufbau benötigten Signals anzeigt.

Gemäß dem zweiten erfindungsgemäßen Verfahren zur Kommunikation per Funk empfängt eine Teilnehmerstation von einer ersten netzseitigen Funkstation für eine Mehrzahl von Teilnehmerstationen ausgestrahlte Informationen, wobei die Informationen Organisationsinformationen einer Mehrzahl von Funkkommunikationssystemen beinhalten. Weiterhin sendet die Teilnehmerstation eine Nachricht, wobei die Nachricht in Bezug auf jedes der Mehrzahl von Funkkommunikationssystemen das teilnehmerstationsseitige Unvermögen zur Detektion eines für einen Verbindungsaufbau benötigten Signals anzeigt.

Das erste erfindungsgemäße Verfahren entspricht der Perspektive der ersten netzseitigen Funkstation bzw. der netzseitigen Perspektive, während das zweite erfindungsgemäße Verfahren der Sicht der Teilnehmerstation entspricht. Für beide Verfahren gelten die folgenden Ausführungen.

Die von der ersten netzseitigen Funkstation ausgestrahlten Informationen beziehen sich auf mehrere Funkkommunikationssysteme, sind somit systemübergreifend. Die Funkkommunikationssysteme können sich durch ihre Betreiber und/oder ihre Funkstandards, d.h. ihre Funkzugangstechnologien, voneinander unterscheiden. Für jedes der Funkkommunikationssysteme enthalten die systemübergreifenden Informationen Organisationsinformationen. Besteht die Mehrzahl der Funkkommunikationssysteme z.B. aus drei Funkkommunikationssystemen, so beinhalten die Informationen Organisationsinformationen für das erste Funkkommunikationssystem, Organisationsinformationen für das zweite Funkkommunikationssystem, und Organisationsinformationen für das dritte Funkkommunikationssystem. Bei den Organisationsinformationen kann es sich insbesondere um Informationen handeln, welche der Teilnehmerstation bekannt sein müssen, bevor diese versucht, eine Verbindung zum jeweiligen Funkkommunikationssystem aufzubauen. Die systemübergreifenden Informationen können neben den Organisationsinformationen weitere Bestandteile beinhalten. Die Informationen beziehen sich vorzugsweise ausschließlich auf Funkkommunikationssysteme, welche in dem Bereich verfügbar sind, in welchem die Informationen ausgestrahlt werden.

Bei der ersten netzseitigen Funkstation kann es sich um eine Funkstation handeln, welche eigens für die Versendung der Informationen und gegebenenfalls zusätzlich für den Empfang der Nachricht eingerichtet ist. Das heißt, es findet neben dieser Kommunikation keine weitere Kommunikation zwischen der ersten netzseitigen Funkstation und Teilnehmerstationen statt. Vorzugsweise ist die erste netzseitige Funkstation in diesem Fall nicht Bestandteil eines der Mehrzahl von Funkkommunikationssystemen. Alternativ hierzu kann es sich bei der ersten netzseitigen Funkstation um eine netzseitige Funkstation eines der Mehrzahl von Funkkommunikationssystemen handeln.

Die Teilnehmerstation muss, um eine Verbindung zu einem der Funkkommunikationssystemen aufzubauen, jeweils ein Signal, z.B. ein Pilotsignal, detektieren. D.h. das Signal muss einerseits von der Teilnehmerstation empfangbar und andererseits auch auswertbar sein. Ein Signal kann z.B. dann nicht detektiert werden, wenn die Teilnehmerstation sich außerhalb des Bereichs der Ausstrahlung des Signals befindet, oder wenn die Teilnehmerstation die jeweilige Funkzugangstechnologie nicht beherrscht.

Durch die Nachricht teilt die Teilnehmerstation mit, dass dies, d.h. die Detektion des jeweiligen Signals, für keines der Funkkommunikationssysteme, deren Organisationsinformation in der Nachricht enthalten sind, möglich ist. Diese Mitteilung kann explizit oder implizit erfolgen. Es ist möglich, dass die Nachricht Gründe für das Unvermögen angibt. Die Teilnehmerstation, welche die Nachricht sendet, hat somit aktuell keine Verbindung zu einem der Funkkommunikationssysteme. Nach Empfang der Informationen und vor Versendung der Nachricht erfolgt eine Prüfung durch die Teilnehmerstation dahingehend, ob ein Verbindungsaufbau zu einem oder mehren der Funkkommunikationssysteme möglich ist.

In Weiterbildung der Erfindung wird für die Informationen und die Nachricht die gleiche Funkfrequenz verwendet. Die gleiche Funkfrequenz ist hierbei vorzugsweise Bestandteil eines Frequenzbandes einer bestimmten Breite, welche vollständig sowohl für die Versendung der Informationen durch die erste netzseitige Funkstation als auch für die Versendung der Nachricht durch die Teilnehmerstation eingesetzt wird. Besonders vorteilhaft ist es, wenn das Frequenzband ausschließlich zum Zwecke der Übertragung der Informationen und der Nachricht zur Verfügung steht, und somit nicht für andere Funkkommunikationen genutzt wird. Die Übertragungen der Informationen und der Nachricht sind vorzugsweise gemäß einem TDD Verfahren voneinander separiert. Hierfür kann eine erste Zeitspanne zur Versendung der Informationen und eine zweite Zeitspanne zur Versendung der Nachricht zur Verfügung stehen. Es kann auf eine erste Zeitspanne eine zweite Zeitspanne folgen, wiederum gefolgt von einer ersten Zeitspanne, usw.

Einer bevorzugten Ausgestaltung der Erfindung gemäß umfasst die Nachricht eine Angabe von von der Teilnehmerstation verwendbaren Funkzugangstechnologien. Dies ermöglicht es, zu erkennen, aus welchem Grund das Unvermögen der Teilnehmerstation vorhanden ist. Unterscheiden sich beispielsweise die in der Nachricht angegebenen Funkzugangstechnologien von denjenigen, welche von den durch die Informationen indizierten Funkkommunikationssystemen verwendet werden, so liegt das Unvermögen nicht in einer mangelhaften Ausstrahlung der für den Verbindungsaufbau benötigen Signale begründet. Vielmehr weist die Teilnehmerstation in diesem Fall nicht die nötige Hardware und/oder Software zur Detektion von jeglichen Signalen der jeweiligen Funkzugangstechnologie auf.

Mit Vorzug sendet die erste netzseitige Funkstation eine Bestätigungsnachricht zur Bestätigung des Empfangs der Nachricht. Durch diese Bestätigungsnachricht kann bewirkt werden, dass die Teilnehmerstation nicht erneut die Nachricht versendet. Vorteilhaft ist es, wenn für die Bestätigungsnachricht und die Informationen die gleiche Funkfrequenz verwendet wird. Hierbei können die Bestätigungsnachricht und die Informationen Bestandteil einer gemeinsamen Nachricht sein.

In Weiterbildung der Erfindung erfolgt nach Empfang der Nachricht eine Umkonfiguration betreffend zumindest eines der Mehrzahl von Funkkommunikationssystemen. Dies bedeutet, dass netzseitig als Reaktion auf die Nachricht der Teilnehmerstation eine Änderung vorgenommen wird. Ziel der Umkonfiguration ist es, das Unvermögen der Teilnehmerstation zu beheben, so dass der Aufbau einer Verbindung zwischen der Teilnehmerstation und zumindest einem der Funkkommunikationssysteme möglich ist.

Die Umkonfiguration kann z.B. das Hinzufügen einer Funkzugangstechnologie umfassen. Das Hinzufügen einer Funkzugangstechnologie bedeutet, dass das jeweilige Funkkommunikationssystem anstelle oder zusätzlich zur vor der Umkonfiguration verwendeten Funkzugangstechnologie die hinzugefügte Funkzugangstechnologie verwenden kann. So kann unter Verwendung der hinzugefügten Funkzugangstechnologie Software an die Teilnehmerstation gesendet werden, wobei diese Software der Teilnehmerstation die Verwendung einer Funkzugangstechnologie ermöglicht. Diese aus Sicht der Teilnehmerstation neue Funkzugangstechnologie konnte von der Teilnehmerstation vor Empfang der Software nicht verwendet werden, nach Empfang und entsprechender Installation der Software hingegen kann die Teilnehmerstation unter Verwendung der neuen Funkzugangstechnologie kommunizieren. Zusätzlich oder alternativ kann die Umkonfiguration den Beginn der Versendung eines für einen Verbindungsaufbau benötigten Signals umfassen. Hierdurch können z.B. Relaystationen oder Repeater, in deren Funkabdeckungsbereich sich die Teilnehmerstation befindet, beginnen, das Signal auszusenden.

Vorzugsweise sendet die netzseitige Funkstation nach der Umkonfiguration die Informationen erneut, wobei der Inhalt der Informationen der erfolgten Umkonfiguration angepasst ist. In diesem Fall kann die Teilnehmerstation den Informationen entnehmen, dass netzseitig eine Änderung erfolgt ist. Im Anschluss an den erneuten Empfang der Informationen kann die Teilnehmerstation versuchen, eine Verbindung zu einem der Funkkommunikationssysteme aufzubauen.

In Ausgestaltung der Erfindung geben die Organisationsinformationen jeweils die von dem jeweiligen Funkkommunikationssystem verwendete Funkzugangstechnologie an. Dies ermöglicht der Teilnehmerstation eine rasche Entscheidung, ob eines oder mehrere Funkkommunikationssysteme vorhanden sind, zu welchen ein Verbindungsaufbau grundsätzlich gelingen könnte. Zusätzlich oder alternativ können die Organisationsinformationen jeweils Funkkanalinformationen des jeweiligen für den Verbindungsaufbau benötigten Signals angeben, wie z.B. die Frequenz der Ausstrahlung. Hierdurch kann ein Verbindungsaufbau zwischen der Teilnehmerstation und dem betreffenden Funkkommunikationssystem rascher erfolgen als ohne Kenntnis dieser Organisationsinformationen.

In Weiterbildung der Erfindung wird die Nachricht von der ersten netzseitigen Funkstation gerichtet empfangen. Bei einem gerichteten Empfang wird die Empfangsantennenvorrichtung so eingestellt, dass sie bevorzugt Signale aus einer bestimmten Raumrichtung empfängt. Besonders vorteilhaft ist es, wenn die Informationen von der ersten netzseitigen Funkstation gerichtet ausgestrahlt werden, wobei die Richtungen des Empfangs der Nachricht und der Ausstrahlung der Informationen aufeinander abgestimmt sind. In diesem Fall können die Informationen von der ersten netzseitigen Funkstation in Richtung auf die Teilnehmerstation ausgestrahlt werden, und entsprechend wird die Nachricht auch aus der Richtung der Teilnehmerstation empfangen. Die Abstimmung der beiden Richtungen aufeinander erfolgt vorzugsweise durch Verwendung der gleichen Strahlformungsparameter für beide Richtungen.

In Ausgestaltung der Erfindung besteht in Bezug auf jedes Funkkommunikationssystem das teilnehmerstationsseitige Unvermögen aufgrund mangelnder Ausstattung der Teilnehmerstation oder aufgrund eines Abstandes der Teilnehmerstation zu einer das jeweilige Signal versendenden netzseitigen Funkstation. In diesem Fall existieren zwei Alternativen für das Unvermögen zum Verbindungsaufbau. Hierbei ist es möglich, dass für alle Funkkommunikationssysteme die erste Alternative zutrifft, oder dass für alle Funkkommunikationssysteme die zweite Alternative zutrifft, oder dass für eines oder mehrere Funkkommunikationssysteme die erste und für eines oder mehrere Funkkommunikationssysteme die zweite Alternative zutrifft.

Die erfindungsgemäße netzseitige Funkstation weist Mittel auf zum Ausstrahlen von Informationen für eine Mehrzahl von Teilnehmerstationen, wobei die Informationen Organisationsinformationen einer Mehrzahl von Funkkommunikationssystemen beinhalten, sowie Mittel zum Empfangen einer Nachricht von einer Teilnehmerstation, wobei die Nachricht in Bezug auf jedes der Mehrzahl von Funkkommunikationssystemen das teilnehmerstationsseitige Unvermögen zur Detektion eines für einen Verbindungsaufbau benötigten Signals anzeigt. Weiterhin können z.B. Mittel zum Initiieren einer Umkonfiguration von zumindest einem Funkkommunikationssystem im Anschluss an den Empfang der Nachricht vorhanden sein.

Die erfindungsgemäße Teilnehmerstation umfasst Mittel zum Empfangen von von einer netzseitigen Funkstation für eine Mehrzahl von Teilnehmerstationen ausgestrahlten Informationen, wobei die Informationen Organisationsinformationen einer Mehrzahl von Funkkommunikationssystemen beinhalten, sowie Mittel zum Senden einer Nachricht, wobei die Nachricht in Bezug auf jedes der Mehrzahl von Funkkommunikationssystemen das teilnehmerstationsseitige Unvermögen zur Detektion eines für einen Verbindungsaufbau benötigten Signals anzeigt. Weiterhin können z.B. Mittel zum Überprüfen der Möglichkeit eines Verbindungsaufbaus nach Empfang der Informationen vorhanden sein.

Die erfindungsgemäße netzseitige Funkstation und die erfindungsgemäße Teilnehmerstation eignen sich insbesondere zur Durchführung der erfindungsgemäßen Verfahren, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt mehrerer Funkkommunikationssysteme,
- Figur 2:: ein Ablaufdiagramm,
- Figur 3:: Nachrichtenversendungen gemäß einer TDD Betriebsweise,
- Figur 4:: den Aufbau einer Bestätigungsnachricht,
- Figur 5:: eine gerichtete Abstrahlung von Informationen.

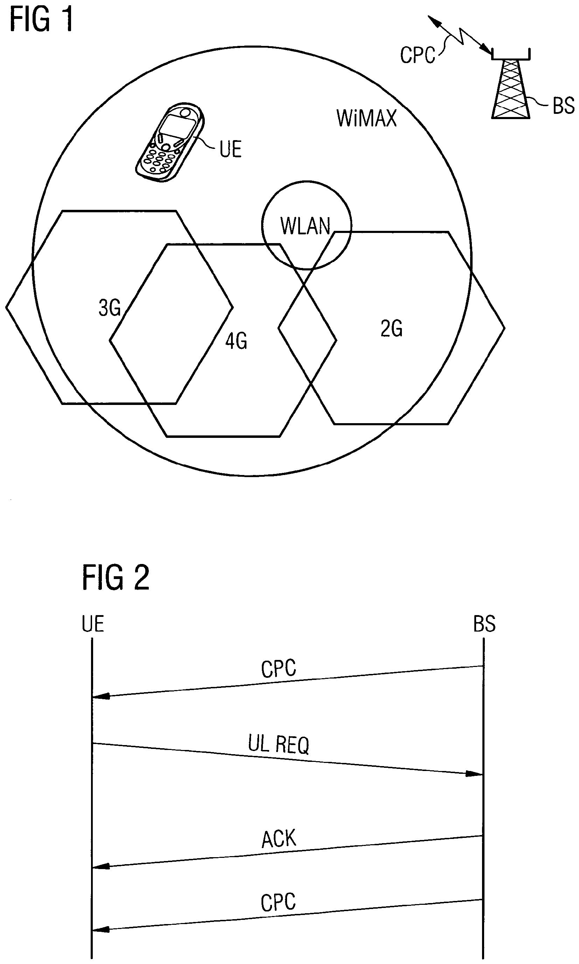

Figur 1 zeigt eine Region, in welcher verschiedene Funkkommunikationssysteme zugänglich sind. Von den verschiedenen Funkkommunikationssystemen 2G, einem System gemäß dem Standard GSM, 3G, einem System gemäß dem Standard UMTS, 4G, einem System der vierten Generation, WiMAX, einem System gemäß dem Standard IEEE 802.16, und WLAN, einem lokalen Funkkommunikationssystem, ist jeweils eine Funkzelle dargestellt. Bei den Funkkommunikationssystemen 2G, 3G und 4G handelt es sich um zellulare Systeme, so dass jedes der Systeme eine Vielzahl von in der Regel flächendeckenden Funkzellen aufweist, auf deren Darstellung der Übersichtlichkeit halber verzichtet wurde. Innerhalb der Funkzelle des Funkkommunikationssystems WiMAX und in der Nähe der dargestellten Funkzellen der Funkkommunikationssysteme 2G, 3G, 4G und WLAN befindet sich die Teilnehmerstation UE.

Das große Angebot an verschiedenen Funkkommunikationssystemen WiMAX, 2G, 3G, 4G und WLAN, die zudem in der Regel in unterschiedlichen systemspezifischen Frequenzbändern arbeiten, kann dazu führen, dass der Zeitraum für einen Aufbau einer Verbindung durch die Teilnehmerstation UE verlängert wird. Möchte die Teilnehmerstation UE beispielsweise einen hochdatenratigen Dienst nutzen, beispielhaft sei Videostreaming genannt, so kann ein derartiger Dienst potenziell von unterschiedlichen Systemen zur Verfügung gestellt werden. Sofern seitens des Teilnehmers kein spezifisches Funkkommunikationssystem vorausgewählt wurde, erfolgt seitens der Teilnehmerstation UE während des Aufbaus der Verbindung eine Kontaktaufnahme zu verschiedenen Funkkommunikationssystemen, bzw. versucht die Teilnehmerstation UE zunächst, Signale von verschiedenen Funkkommunikationssystemen - beispielsweise des gleichen Betreibers - zu empfangen und anschließend ein für den gewählten Dienst geeignetes Funkkommunikationssystem auszuwählen.

Insbesondere wenn die Teilnehmerstation UE an einem Ort in Betrieb genommen wird, an dem sie zuvor keinerlei Verbindung zu einem Funkkommunikationssystem unterhalten hat und somit nicht auf Erfahrungswerte aus vorherigen Verbindungen zurückgreifen kann, beispielsweise wenn der Teilnehmer nach einem Flug im Ausland angekommen ist, kommt zudem gegebenenfalls erschwerend bzw. die Zugriffszeit verlängernd hinzu, dass nicht bekannt ist, mit welchem lokalen Betreiber der heimatliche Betreiber ein so genanntes Roamingabkommen geschlossen hat, um Kunden erniedrigte Verbindungsgebühren zu gewähren. In diesem Fall wird der Teilnehmerstation UE gegebenenfalls mehrmals ein lokales Funkkommunikationssystem bzw. ein Betreiber vorgeschlagen, zu welchem die Teilnehmerstation UE dann entscheiden muss, ob ein Verbindungsaufbau erfolgen soll oder nicht.

Um die Kontaktaufnahme zwischen der Teilnehmerstation UE und einem der Funkkommunikationssysteme 2G, 3G, 4G, WiMAX und WLAN zu erleichtern, strahlt die Basisstation BS systemübergreifende Informationen CPC aus. Bei den systemübergreifenden Informationen CPC handelt es sich um Organisationsinformationen betreffend mehrere Funkkommunikationssysteme. Hinsichtlich der Ausgestaltung der Basisstation BS existieren mehrere Möglichkeiten. Es können die systemübergreifende Informationen CPC beispielsweise von öffentlichen oder privaten Rundfunksendestationen ausgestrahlt werden, um eine möglichst flächendeckende Empfangbarkeit der systemübergreifende Informationen CPC zu gewährleisten. Dies kann entsprechend einem zellularen System erfolgen, d.h. mittels einer Vielzahl von Rundfunksendestationen, welche ein jeweiliges Teilgebiet versorgen, wobei bei Nutzung eines landesweit gleichen Frequenzbandes eine Trennung zwischen den einzelnen Funkzellen beispielsweise mittels einer CDMA-Trennung erfolgt. Bekannte Prinzipien von so genannten Gleichwellensystemen sind anwendbar. Alternativ zu der erläuterten Ausstrahlung mittels Rundfunksendestationen kann eine Aussendung der systemübergreifenden Informationen CPC durch netzseitige Funkstationen der Funkkommunikationssysteme WiMAX, 2G, 3G, 4G und WLAN erfolgen.

Die systemübergreifenden Informationen CPC zeigen zumindest an, welche Funkzugangstechnologien (englisch RAT, Radio Access Technology) im Funkabdeckungsbereich der die systemübergreifenden Informationen CPC ausstrahlenden Basisstation BS verfügbar sind. Bezogen auf den in Figur 1 dargestellten Ausschnitt geben die systemübergreifenden Informationen CPC somit an, dass Funkkommunikationssysteme mit Funkzugangstechnologien gemäß den Standards IEEE 802.16, GSM, UMTS, 4G und WLAN vorhanden sind. Weiterhin können in den systemübergreifenden Informationen CPC detaillierte Angaben enthalten sein, welche den Zugang zu den jeweiligen Funkkommunikationssystemen WiMAX, 2G, 3G, 4G und WLAN ermöglichen, wie beispielsweise die Frequenz der Ausstrahlung der systemspezifischen Pilötkanäle, Synchronisationskanäle oder Steuerkanäle der jeweiligen Funkkommunikationssysteme. Der Begriff Pilotkanal wird nachfolgend als Synonym für solche systemspezifischen Kanäle verwendet.

Auch eine mehrstufige Versendung von systemübergreifenden Informationen CPC ist möglich, z.B. indem eine erste Basisstation die verschiedenen Funkzugangstechnologien angibt, und eine andere Basisstation detaillierte Angaben hierzu ausstrahlt. Eine weitere Möglichkeit ist, dass der systemübergreifende Kanal in einen ersten Unterkanal, in dem ausschließlich Organisationsinformationen zu flächendeckend realisierten Funkkommunikationssystemen übertragen werden, und einen zweiten Unterkanal, in dem ausschließlich Organisationsinformationen zu lediglich lokal verwirklichten Funkkommunikationssystemen übertragen werden, aufgespaltet ist. Ferner ist es möglich, dass die Unterkanäle jeweils unterschiedliche Frequenzbänder nutzen, und dass der erste Unterkanal omnidirektional, der zweite Unterkanal hingegen gerichtet ausgestrahlt wird.

Figur 2 zeigt ein Ablaufdiagramm, bei welchem zu Beginn die Basisstation BS die systemübergreifenden Informationen CPC ausstrahlt. Es wird angenommen, dass die Teilnehmerstation UE eingeschaltet bzw. in Betrieb genommen wird, d.h. ein Verbindungsaufbau wird von der Teilnehmerstation UE initiiert. Eine erstmaliges Einschalten findet beispielsweise nach Kauf des Endgerätes durch den Teilnehmer oder nach Ankunft am Flughafen nach einer Reise aus einem anderen Land bzw. einer längeren Außerbetriebnahme der Teilnehmerstation UE statt. Vor einer Kontaktaufnahme zu einem am aktuellen Aufenthaltsort der Teilnehmerstation UE verfügbaren Funkkommunikationssysteme stimmt sich die Teilnehmerstation UE zunächst auf das Frequenzband der systemübergreifenden Informationen CPC ab, empfängt diese und wertet die Organisationsinformationen zu verfügbaren Funkkommunikationssystemen aus, und wählt nachfolgend ein geeignetes oder, beispielsweise aufgrund von auf der SIM-Karte gespeicherten Betreiberinformationen oder Roamingabkommen unterstütztes Funkkommunikationssystem aus. Das Frequenzband sowie die Zugangstechnologie des Kanals der systemübergreifenden Informationen CPC ist dem Teilnehmerendgerät UE dabei per se bekannt, sodass ein gezielter und schneller Zugriff auf diese Informationen CPC erfolgen kann.

Ziel der Teilnehmerstation UE ist es, nach Auswertung der systemübergreifenden Informationen CPC eine Verbindung zu einem der Funkkommunikationssysteme herzustellen. Dies wird bewirkt, indem die Teilnehmerstation UE die Organisationsinformationen des Pilotkanals des jeweiligen Funkkommunikationssystems detektiert und im Anschluss eine Zufallszugriffsnachricht an eine netzseitige Funkstation dieses Funkkommunikationssystems sendet. Im folgenden wird davon ausgegangen, dass ein Verbindungsaufbau zu keinem der Funkkommunikationssysteme, welche durch die systemübergreifenden Informationen CPC angezeigt werden, möglich ist.

Für das Scheitern eines Verbindungsaufbaus kann es verschiedene Gründe geben. Beispielsweise ist es möglich, dass die Teilnehmerstation UE nicht über die passende Software zur Kommunikation mit dem jeweiligen Funkkommunikationssystem 2G, 3G, 4G, WLAN, WiMAX aufweist. Weiterhin könnte sich die Teilnehmerstation UE außerhalb der Funkreichweite (englisch: coverage) der netzseitigen Funkstationen des jeweiligen Funkkommunikationssystems befinden. Beispielsweise befindet sich die Teilnehmerstation UE in Figur 1 außerhalb der Funkreichweite des Funkzugangspunktes des lokalen Funkkommunikationssystems WLAN. In beiden genannten Fällen ist es der Teilnehmerstation UE nicht möglich, den Pilotkanal des jeweiligen Funkkommunikationssystems auszuwerten.

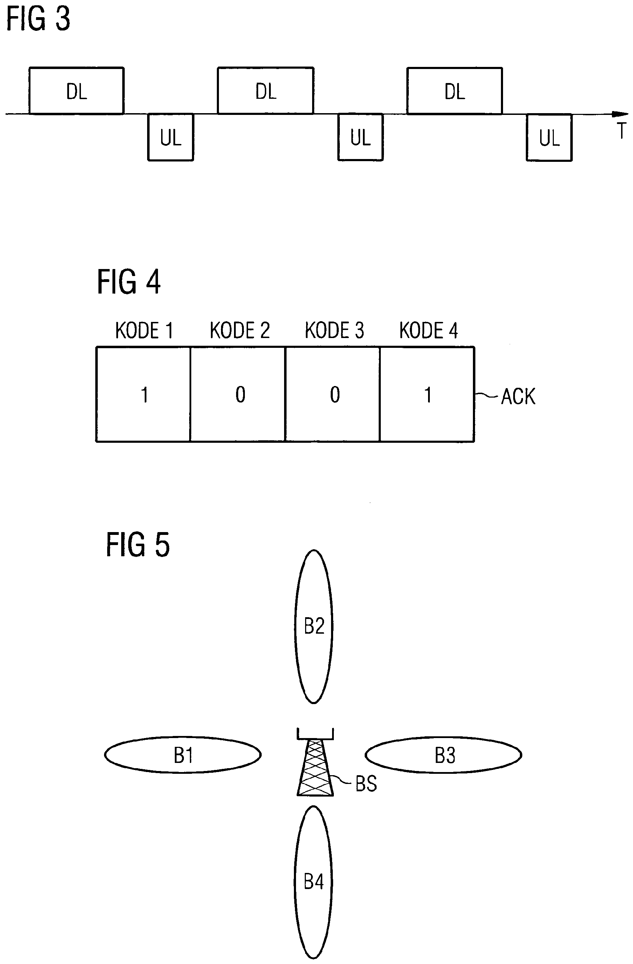

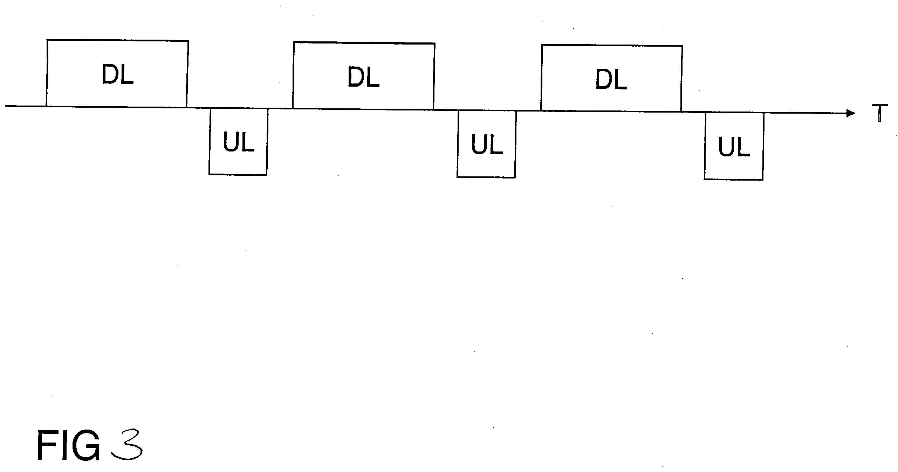

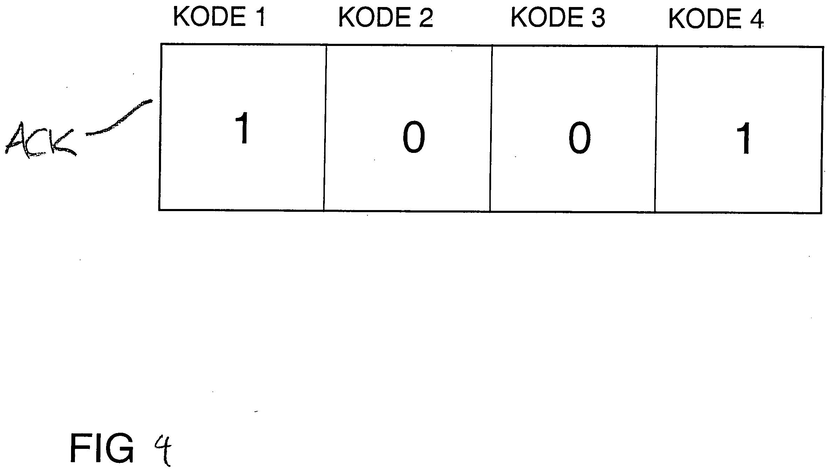

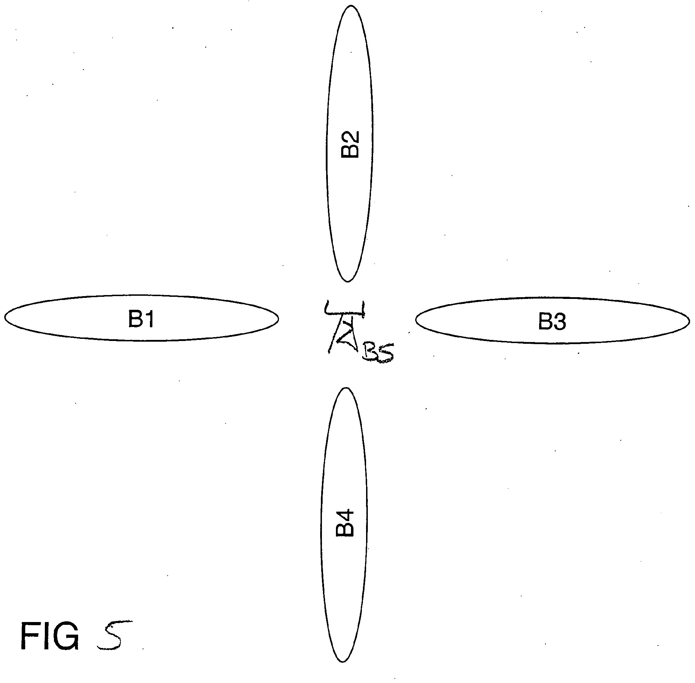

Aufgrund der Tatsache, dass der Teilnehmerstation UE der Verbindungsaufbau zu keinem der Funkkommunikationssysteme, welche durch die systemübergreifenden Informationen CPC angezeigt werden, möglich ist, sendet die Teilnehmerstation UE die Nachricht UL REQ. Zur Versendung dieser Nachricht UL REQ wird das gleiche Frequenzband verwendet, welches die Basisstation BS zur Versendung der systemübergreifenden Informationen CPC einsetzt. Hierbei wird ein TDD-Verfahren eingesetzt, d.h. die Versendungen der systemübergreifenden Informationen CPC durch die Basisstation BS und der Nachrichten UL REQ durch Teilnehmerstationen sind im Zeitbereich voneinander getrennt, wie in Figur 3 dargestellt. In Figur 3 ist der Verlauf der Zeit T nach rechts aufgetragen. Es wechseln sich eine Zeitspanne DL für die Versendung der systemübergreifenden Informationen CPC in Abwärtsrichtung (englisch: Downlink) von der Basisstation BS zu Teilnehmerstationen, mit einer Zeitspanne UL für die Versendung von Nachrichten UL REQ in Aufwärtsrichtung (englisch: Uplink) von Teilnehmerstationen zur Basisstation BS ab. Die Zeitspannen UL stehen hierbei allen Teilnehmerstationen zur Verfügung, welche das erläuterte Problem des Unvermögens zur Detektion der Pilotsignale haben. Vorzugsweise ist eine Schutzzeitspanne (englisch: guard period) zwischen dem Ende der Zeitspanne DL und dem Beginn der Zeitspanne UL vorgesehen, d.h. die Teilnehmerstation UE muss nach Empfang der systemübergreifenden Informationen CPC die Schutzzeitspanne abwarten, bevor eine Versendung der Nachricht UL REQ zulässig ist. Die Trennung des gemeinsamen Abwärts-Kanals der systemübergreifenden Informationen CPC von dem gemeinsamen Aufwärts-Kanal der Nachrichten UL REQ durch ein TDD-Verfahren ist vorteilhaft für die Komplexität der teilnehmerstationsseitigen Transceiver. Denn diese müssen auf dem Frequenzband der gemeinsamen Kanäle nicht gleichzeitig senden und empfangen.

Es ist günstig, wenn für die Nachricht UL REQ ein CDMA-Verfahren angewandt wird. Hierdurch kann verhindert werden, dass in der gleichen Zeitspanne UL von verschiedenen Teilnehmerstationen versendete Nachrichten UL REQ interferieren und somit empfängerseitig nicht detektierbar sind. Für diese Zwecke kann eine Gruppe von CDMA Kodes mit guten Kreuzkorrelationseigenschaften zur Verfügung stehen, wobei die Teilnehmerstation UE einen dieser Kodes gemäß einem Zufallsverfahren, eventuell unter Verwendung ihrer Identifikationsinformation, auswählt. Für die empfängerseitige Detektion der Nachricht UL REQ können an sich bekannte Verfahren der Detektion von Zufallszugriffsnachrichten eingesetzt werden, wie z.B. Blind Detection Verfahren.

Vorzugsweise handelt es sich bei dem Empfänger der Nachricht UL REQ um die Basisstation BS. Aufgrund der beschränkten Sendeleistung von Teilnehmerstationen ist es jedoch möglich, dass die Teilnehmerstation UE zwar die systemübergreifenden Informationen CPC empfangen kann, während hingegen eine direkte Übertragung der Nachricht UL REQ von der Teilnehmerstation UE an die Basisstation BS nicht möglich ist. In diesem Fall kann die Nachricht UL REQ durch eine andere netzseitige Funkstation an die Basisstation BS weitergeleitet werden. Ist nicht die Basisstation BS, sondern eine andere netzseitige Funkstation für die Verarbeitung der Nachricht UL REQ und die entsprechend zu treffenden Maßnahmen verantwortlich, so erfolgt eine Weiterleitung an die betreffende netzseitige Funkstation oder die betreffende netzseitige Funkstation empfängt die Nachricht UL REQ direkt von der Teilnehmerstation UE.

Im Anschluss versendet die Basisstation BS eine Bestätigungsnachricht ACK an die Teilnehmerstation UE. Die Bestätigungsnachricht ACK kann hierbei ein Bestandteil einer der nächsten Ausstrahlungen der systemübergreifenden Informationen CPC sein. Alternativ kann die Bestätigungsnachricht ACK in den für die systemübergreifenden Informationen CPC vorgesehen Zeitspannen DL getrennt von den systemübergreifenden Informationen CPC versendet werden. In beiden Fällen wird für die Bestätigungsnachricht ACK und für die systemübergreifenden Informationen CPC das gleiche Frequenzband eingesetzt.

Die Bestätigungsnachricht ACK zeigt an, ob die Basisstation BS die Nachricht UL REQ der Teilnehmerstation UE empfangen hat. Figur 4 zeigt einen Teil einer Bestätigungsnachricht ACK für den Fall, dass wie oben erläutert für die Nachricht UL REQ ein CDMA Verfahren angewandt wurde. Das erste Bit des Ausschnittes der Figur 4 entspricht einem ersten Kode KODE 1, das zweite Bit einem zweiten Kode KODE 2, das dritte Bit einem dritten Kode KODE 3, und das vierte Bit einem vierten Kode KODE 4. Ein Bitwert von 1 zeigt an, dass für den jeweiligen Kode eine Nachricht UL REQ empfangen wurde. Hat die Teilnehmerstation UE beispielsweise für ihre Nachricht UL REQ den Kode KODE 1 ausgewählt und verwendet, so kann sie der Nachricht ACK der Basisstation BS entnehmen, dass diese die Nachricht UL REQ empfangen hat. Das Gegenteil wäre bei Verwendung der Kodes KODE 2 oder KODE 3 der Fall.

Die Nachricht ACK entspricht einer reinen Empfangsbestätigung; die Teilnehmerstation UE kann der Nachricht ACK nicht entnehmen, ob aufgrund ihrer Nachricht UL REQ Maßnahmen ergriffen werden bzw. welche Maßnahmen ergriffen werden.

Empfängt die Teilnehmerstation UE auf ihre Nachricht UL REQ hin keine Nachricht ACK, so sendet sie ihre Nachricht UL REQ erneut. Vorteilhafterweise ist vorgesehen, dass eine erneute Versendung erst nach einer bestimmten Zeitspanne des Abwartens erlaubt ist. Für die erneute Versendung kann die Teilnehmerstation UE eine höhere Sendeleistung und/oder einen anderen CDMA Kode einsetzen.

Die Abstrahlung der systemübergreifenden Informationen CPC durch die Basisstation BS kann unidirektional erfolgen. Vorzugsweise jedoch findet eine gerichtete Abstrahlung der systemübergreifenden Informationen CPC statt. Figur 5 zeigt eine solche gerichtete Abstrahlung, wobei vier Strahlen (englisch: beam) B1, B2, B3 und B4 eingesetzt werden. Die Inhalte der systemübergreifenden Informationen CPC der verschiedenen Strahlen B1, B2, B3 und B4 können hierbei die gleichen sein oder sich voneinander unterscheiden.

Eine Strahlformung erfolgt dabei nach bekannten Prinzipien, beispielsweise mittels so genannter intelligenter Antennen (englisch: smart antenna), welche eine quasi stufenlose Nachführung des Strahls ermöglichen, oder mittels eines so genannten geschalteten Strahls (englisch: switched beam), welcher eine Ausrichtung des Strahl in diskreten Schritten ermöglicht, oder mittels Sektorantennen, welche jeweils einen festen Raumwinkel ausleuchten. Die Form der in der Figur 5 dargestellten Strahlen B1, B2, B3 und B4, in welchen die systemübergreifenden Informationen CPC ausgesendet werden, ist nur beispielhaft, d.h. sie kann beispielsweise abhängig von den physikalischen Eigenschaften der Antennen oder auch der Menge zu übertragender Organisationsinformationen und dem Zeitraum, in dem die systemübergreifenden Informationen CPC in eine bestimmte Richtung von der Basisstation BS abgestrahlt werden, dimensioniert werden.

Die systemübergreifenden Informationen CPC werden zu einem ersten Zeitpunkt t1 entsprechend dem Strahl B1 in eine erste Richtung bzw. einen ersten Raumwinkel ausgesendet wird, währenddessen sie zu einem zweiten Zeitpunkt t2 entsprechend dem Strahl B2 in eine zweite, von der ersten Richtung unterschiedliche Richtung ausgesendet werden, usw. Dies erfolgt beispielsweise im Sinne eines umlaufenden Strahls oder nach einem bestimmten Muster, sodass innerhalb eines bestimmten Zeitraumes die Zelle der Basisstation BS vollständig mit dem Strahl ausgeleuchtet wird. Bei einer derartigen Verwendung von Strahlen für die systemübergreifenden Informationen CPC entspricht die erste Zeitspanne DL der Figur 3 z.B. dem ersten Strahl B1 der Figur 5, die zweite Zeitspanne DL der Figur 3 dem zweiten Strahl B2, usw.

Um eine sichere Übertragung der Nachricht UL REQ von der Teilnehmerstation UE zur Basisstation BS zu gewährleisten, ist es vorteilhaft, wenn auch für den Empfang der Nachricht UL REQ durch die Basisstation BS eine gerichtete Antenneneinstellung verwendet wird. Denn aufgrund der Richtungswirkung kann eine größere Reichweite für eine Funknachricht erzielt werden; außerdem wird die Wahrscheinlichkeit von Interferenzen reduziert. Sendet die Basisstation BS die systemübergreifenden Informationen CPC beispielsweise durch den Strahl B1, so ist es vorteilhaft, wenn die Basisstation BS direkt im Anschluss an diese Versendung der systemübergreifenden Informationen CPC zum Empfang der Nachricht UL REQ die gleichen Strahlformungsparameter verwendet. Aufgrund des gerichteten Empfangs der Nachricht UL REQ durch die Basisstation BS ist der Basisstation BS bekannt, wo sich die Teilnehmerstation UE befindet. Denn wenn die Strahlformungsparameter für den Empfang beispielsweise gemäß dem Strahl B1 eingestellt sind, empfängt die Basisstation BS Signale lediglich von Teilnehmerstationen, welche sich innerhalb des Gebietes des Strahls B1 befinden. Die Kenntnis des Aufenthaltsortes der Teilnehmerstation UE kann netzseitig zur gezielten Durchführung der im folgenden erläuterten Umkonfiguration eingesetzt werden.

Die Nachricht UL REQ enthält die Angabe, über welche Funkzugangstechnologie(n) die Teilnehmerstation UE kommunizieren kann, im folgenden als Profil der Teilnehmerstation UE bezeichnet. Die Maßnahmen, welche netzseitig nach Empfang der Nachricht UL REQ getroffen werden, hängen von dem von der Teilnehmerstation UE erfahrenen Problem ab. Hierzu sind verschiedene Szenarien denkbar, von welchen einige beispielhaft erläutert werden:
- Die Nachricht UL REQ kann angeben, dass die Teilnehmerstation UE keine der in den systemübergreifenden Informationen CPC indizierten Funkzugangstechnologien beherrscht. Dies trifft zu, wenn sich die Funkzugangstechnologien des Profils des Teilnehmerstation UE von denjenigen der Funkkommunikationssystems 2G, 3G, 4G, WLAN, WiMAX unterscheiden. Das Profil der Teilnehmerstation UE gibt daher im folgenden als "neue" Funkzugangstechnologie bezeichnete Funkzugangstechnologien an. Als Maßnahme erfolgt eine Umkonfiguration von zumindest einer netzseitigen Funkstation, so dass diese unter Verwendung einer neuen Funkzugangstechnologie kommunizieren kann. Hierzu wird vorzugsweise eine netzseitige Funkstation ausgewählt, welche sich innerhalb der Funkreichweite der Teilnehmerstation UE befindet. Die Ermittlung einer passenden netzseitigen Funkstation wird erleichtert, wenn die Teilnehmerstation Basisstation für den Empfang der Nachricht UL REQ eine gerichtete Antennencharakteristik verwendet, so dass der Aufenthaltsort der Teilnehmerstation UE bestimmt werden kann. Die Teilnehmerstation UE kann im Anschluss eine Verbindung zu dieser netzseitigen Funkstation unter Verwendung der neuen Funkzugangstechnologie aufbauen, und es kann die von der Teilnehmerstation UE angeforderte Kommunikation unter Verwendung dieser neuen Funkzugangstechnologie stattfinden.
- Gibt die Nachricht UL REQ wie oben erläutert an, dass die Teilnehmerstation UE keine in den systemübergreifenden Informationen CPC indizierten Funkzugangstechnologien beherrscht, so ist es auch möglich, die Teilnehmerstation UE mit dieser Fähigkeit auszustatten, indem ihr die jeweilige Software zur Verfügung gestellt wird. Dies entspricht dem Gedanken des Software Defined Radio. Eine Möglichkeit für das Zur-Verfügung-Stellen der Software ist die Übertragung der Software über den für die systemübergreifenden Informationen CPC zur Verfügung stehenden Funkkanal. Dies ist jedoch insofern nachteilig, als es sich hierbei um einen gemeinsamen Kanal handelt, welcher nicht für Nachrichten einzelner Teilnehmerstationen zur Verfügung stehen sollte. Dementsprechend sollte die Versendung der Software über eine andere netzseitige Funkstation erfolgen. Da diese netzseitige Funkstation aktuell lediglich Funkzugangstechnologien einsetzen, welche die Teilnehmerstation UE nicht beherrscht, erfolgt wie oben bereits erläutert eine Umkonfiguration von zumindest einer der netzseitigen Funkstationen derart, so dass ihr eine Kommunikation mit der Teilnehmerstation UE über eine neue Funkzugangstechnologie aus dem Profil der Teilnehmerstation UE möglich ist. Die Teilnehmerstation UE baut im Anschluss an die Umkonfiguration eine Verbindung zu der umkonfigurierten netzseitigen Funkstation unter Verwendung der neuen Funkzugangstechnologie auf, und es erfolgt die Versendung der Software unter Verwendung der neuen Funkzugangstechnologie. Nach Installation dieser Software kann eine Kommunikation mit der Teilnehmerstation UE gemäß der der Software entsprechenden Funkzugangstechnologie stattfinden.
- Die Nachricht UL REQ kann angeben, dass die Teilnehmerstation UE zwar eine oder mehrere der in den systemübergreifenden Informationen CPC indizierten Funkzugangstechnologien beherrscht, jedoch keinen Pilotkanal dieser Funkzugangstechnologie(n) empfangen kann. Dies trifft zu, wenn zumindest eine Funkzugangstechnologie des Profils der Teilnehmerstation UE mit einer Funkzugangstechnologie der Funkkommunikationssysteme 2G, 3G, 4G, WLAN, WiMAX übereinstimmt. In diesem Fall sollte versucht werden, die Ausstrahlung des jeweiligen Pilotkanals so zu verändern, dass sich die Teilnehmerstation UE innerhalb des Funkabdeckungsbereiches dieses Pilotkanals befindet. Möglicherweise ist hierzu eine Sendeleistungssteigerung ausreichend. Eine andere Möglichkeit ist, dass eine netzseitige Funkstation, welche aktuell die Informationen des Pilotkanals nicht versendet, mit dieser Versendung beginnt. Ein Beispiel hierfür ist eine Relais-Funkstation, welche nur dann die Informationen des Pilotkanals versendet, wenn ihr bekannt ist, dass Teilnehmerstationen diese benötigen.

Es erfolgt somit als Reaktion auf die Nachricht UL REQ netzseitig eine Umkonfiguration, welche bewirkt, dass eine Verbindung zwischen einem der Funkkommunikationssysteme und der Teilnehmerstation UE hergestellt werden kann. Den Anstoß für die jeweilige Maßnahme gibt vorzugsweise die Basisstation BS aufgrund des Empfangs der Nachricht UL REQ. Alternativ hierzu ist es möglich, dass eine andere netzseitige Funkstation die Nachricht UL REQ empfängt und entweder eine eigene Umkonfiguration oder eine Umkonfiguration einer anderen netzseitigen Funkstation initiiert.

Die Teilnehmerstation UE kann von der erfolgten Umkonfiguration durch die Auswertung der folgenden systemübergreifenden Informationen CPC erfahren. Dies ist insbesondere für den Fall relevant, dass aufgrund der Umkonfiguration eine zusätzliche Funkzugangstechnologie zugänglich geworden ist. Wurde der Bereich der Ausstrahlung des Pilotkanals einer bestimmten Funkzugangstechnologie im Rahmen der Umkonfiguration vergrößert, muss sich dies nicht in einer Änderung der systemübergreifenden Informationen CPC niederschlagen. Die Teilnehmerstation kann jedoch nach Empfang der Nachricht ACK erneut versuchen, diesen Pilotkanal zu empfangen, was ihr aufgrund des erweiterten Ausstrahlungsbereichs gelingen wird.

Ist trotz der Umkonfiguration der Aufbau einer Verbindung zwischen der Teilnehmerstation UE und einem der Funkkommunikationssysteme nicht möglich, so kann die Teilnehmerstation UE erneut eine Nachricht UL REQ versenden. Vorzugsweise ist der Teilnehmerstation UE eine Mindestzeitspanne vorgegeben, welche zwischen dem Empfang der Nachricht ACK und der erneuten Versendung einer Nachricht UL REQ verstreichen muss.

Die Basisstation BS kann zeitweilig die Versendung der systemübergreifenden Informationen CPC aussetzen. Diese Unterbrechung der Ausstrahlung kann auf manche der in Figur 5 beispielhaft gezeigten Strahlen beschränkt sein. Ein derartiges Vorgehen ist vorteilhaft, um Interferenzen in benachbarten die systemübergreifenden Informationen CPC ausstrahlenden Zellen zu reduzieren. Trotz der Tatsache, dass die Basisstation BS aktuell die systemübergreifenden Informationen CPC nicht oder nur in manchen Gebieten versendet, kann sie dennoch Nachrichten UL REQ von Teilnehmerstationen empfangen. Stellt die Teilnehmerstation fest, dass sie keine systemübergreifenden Informationen CPC empfängt, so kann sie eine Nachricht UL REQ versenden. Durch den Empfang dieser Nachricht UL REQ wird die Basisstation BS angestoßen, die Versendung der systemübergreifenden Informationen CPC wieder aufzunehmen. Entsprechendes gilt auch, wenn die Teilnehmerstation UE die systemübergreifenden Informationen CPC nicht von der Basisstation BS direkt, sondern durch Weiterleitung durch eine andere netzseitige Funkstation erhält. Wenn diese netzseitige Funkstation aktuell die systemübergreifenden Informationen CPC nicht weiterleitet, kann die Teilnehmerstation UE diese nicht empfangen. Aufgrund des Empfangs einer Nachricht UL REQ von der Teilnehmerstation UE wird die netzseitige Funkstation angeregt, die Weiterleitung der systemübergreifenden Informationen CPC fortzusetzen.

Die für die Beschreibung der Figuren verwendeten Namen und Bezeichnungen von Funkstandards und Systemkomponenten sind nicht als eine Beschränkung der Erfindung auf diese Standards zu verstehen. Vielmehr ist die Erfindung nach vorstehender Beschreibung in unterschiedlichsten Systemen und Konfigurationen einsetzbar.

## Patentansprüche

1. Verfahren zur Kommunikation per Funk, bei dem eine erste netzseitige Funkstation (BS) Informationen (CPC) für eine Mehrzahl von Teilnehmerstationen (UE) ausstrahlt, wobei die Informationen (CPC) Organisationsinformationen einer Mehrzahl von Funkkommunikationssystemen (2G, 3G, 4G, WLAN, WiMAX) beinhalten,
und
die erste netzseitige Funkstation (BS) oder eine andere netzseitige Funkstation von einer Teilnehmerstation (UE) eine Nachricht (UL REQ) empfängt, charakterisiert dadurch, dass wobei die Nachricht (UL REQ) in Bezug auf jedes der Mehrzahl von Funkkommunikationssystemen (2G, 3G, 4G, WLAN, WiMAX) das teilnehmerstationsseitige Unvermögen zur Detektion eines für einen Verbindungsaufbau benötigten Signals anzeigt.

2. Verfahren zur Kommunikation per Funk, bei dem eine Teilnehmerstation (UE)
von einer ersten netzseitigen Funkstation (BS) für eine Mehrzahl von Teilnehmerstationen (UE) ausgestrahlte Informationen (CPC) empfängt, wobei die Informationen (CPC) Organisationsinformationen einer Mehrzahl von Funkkommunikationssystemen (2G, 3G, 4G, WLAN, WiMAX) beinhalten, und
eine Nachricht (UL REQ) sendet, charakterisiert dadurch, dass die Nachricht (UL REQ) in Bezug auf jedes der Mehrzahl von Funkkommunikationssystemen (2G, 3G, 4G, WLAN, WiMAX) das teilnehmerstationsseitige Unvermögen zur Detektion eines für einen Verbindungsaufbau benötigten Signals anzeigt.

3. Verfahren nach Anspruch 1 oder 2, bei dem für die Informationen (CPC) und die Nachricht (UL REQ) die gleiche Funkfrequenz verwendet wird.

4. Verfahren nach Anspruch 3, bei dem
die Übertragungen der Informationen (CPC) und der Nachricht (UL REQ) gemäß einem TDD Verfahren voneinander separiert sind.

5. Verfahren nach einem der Ansprüche 1 bis 4, bei dem
die Nachricht (UL REQ) eine Angabe von von der Teilnehmerstation (UE) verwendbaren Funkzugangstechnologien umfasst.

6. Verfahren nach einem der Ansprüche 1 bis 5, bei dem
die erste netzseitige Funkstation (BS) eine Bestätigungsnachricht (ACK) zur Bestätigung des Empfangs der Nachricht (UL REQ) sendet.

7. Verfahren nach Anspruch 6, bei dem
für die Bestätigungsnachricht (ACK) und die Informationen (CPC) die gleiche Funkfrequenz verwendet wird.

8. Verfahren nach einem der Ansprüche 1 bis 7, bei dem
nach Empfang der Nachricht (UL REQ) eine Umkonfiguration betreffend zumindest eines der Mehrzahl von Funkkommunikationssystemen (2G, 3G, 4G, WLAN, WiMAX) erfolgt.

9. Verfahren nach Anspruch 8, bei dem
die Umkonfiguration das Hinzufügen einer Funkzugangstechnologie umfasst.

10. Verfahren nach Anspruch 9, bei dem
unter Verwendung der hinzugefügten Funkzugangstechnologie Software an die Teilnehmerstation (UE) gesendet wird, wobei diese Software der Teilnehmerstation (UE) die Verwendung einer Funkzugangstechnologie ermöglicht.

11. Verfahren nach einem der Ansprüche 8 bis 10, bei dem
die Umkonfiguration den Beginn der Versendung eines für einen Verbindungsaufbau benötigten Signals umfasst.

12. Verfahren nach einem der Ansprüche 8 bis 11, bei dem
die erste netzseitige Funkstation (BS) nach der Umkonfiguration erneut die Informationen (CPC) sendet, wobei der Inhalt der Informationen (CPC) der erfolgten Umkonfiguration angepasst ist.

13. Verfahren nach einem der Ansprüche 1 bis 12, bei dem
die Organisationsinformationen jeweils die von dem jeweiligen Funkkommunikationssystem (2G, 3G, 4G, WLAN, WiMAX) verwendete Funkzugangstechnologie angeben.

14. Verfahren nach einem der Ansprüche 1 bis 13, bei dem
die Organisationsinformationen jeweils Funkkanalinformationen des jeweiligen für den Verbindungsaufbau benötigten Signals angeben.

15. Verfahren nach einem der Ansprüche 1 bis 14, bei dem
die Nachricht (UL REQ) von der ersten netzseitigen Funkstation (BS) gerichtet empfangen wird.

16. Verfahren nach Anspruch 15, bei dem
die Informationen (CPC) von der ersten netzseitigen Funkstation (BS) gerichtet ausgestrahlt werden, wobei die Richtungen des Empfangs der Nachricht (UL REQ) und der Ausstrahlung der Informationen (CPC) aufeinander abgestimmt sind.

17. Verfahren nach einem der Ansprüche 1 bis 16, bei dem
in Bezug auf jedes Funkkommunikationssystem (2G, 3G, 4G, WLAN, WiMAX) das teilnehmerstationsseitige Unvermögen aufgrund mangelnder Ausstattung der Teilnehmerstation (UE) oder aufgrund eines Abstandes der Teilnehmerstation (UE) zu einer das jeweilige Signal versendenden netzseitigen Funkstation besteht.

18. Netzseitige Funkstation (BS) zur Kommunikation per Funk, mit
Mitteln zum Ausstrahlen von Informationen (CPC) für eine Mehrzahl von Teilnehmerstationen (UE), wobei die Informationen (CPC) Organisationsinformationen einer Mehrzahl von Funkkommunikationssystemen (2G, 3G, 4G, WLAN, WiMAX) beinhalten,
und
Mitteln zum Empfangen einer Nachricht (UL REQ) von einer Teilnehmerstation (UE), charakterisiert dadurch, dass die Nachricht (UL REQ) in Bezug auf jedes der Mehrzahl von Funkkommunikationssystemen (2G, 3G, 4G, WLAN, WiMAX) das teilnehmerstationsseitige Unvermögen zur Detektion eines für einen Verbindungsaufbau benötigten Signals anzeigt.

19. Teilnehmerstation (UE) zur Kommunikation per Funk, mit
Mitteln zum Empfangen von von einer netzseitigen Funkstation (BS) für eine Mehrzahl von Teilnehmerstationen (UE) ausgestrahlten Informationen (CPC), wobei die Informationen (CPC) Organisationsinformationen einer Mehrzahl von Funkkommunikationssystemen (2G, 3G, 4G, WLAN, WiMAX) beinhalten,
und
Mitteln zum Senden einer Nachricht (UL REQ), charakterisiert dadurch, dass die Nachricht (UL REQ) in Bezug auf jedes der Mehrzahl von Funkkommunikationssystemen (2G, 3G, 4G, WLAN, WiMAX) das teilnehmerstationsseitige Unvermögen zur Detektion eines für einen Verbindungsaufbau benötigten Signals anzeigt.

## Claims

1. Method for communication by radio, in which a first network-based radio station (BS) broadcasts information (CPC) for a plurality of subscriber stations (UE), the information (CPC) containing organization information for a plurality of radio communication systems (2G, 3G, 4G, WLAN, WiMAX), and
the first network-based radio station (BS) or another network-based radio station receives a message (UL REQ) from a subscriber station (UE), **characterized in that** the message (UL REQ) indicates for each of the plurality of radio communication systems (2G, 3G, 4G, WLAN, WiMAX) the subscriber station inability to detect a signal required for connection setup.

2. Method for communication by radio, in which a subscriber station (UE)
receives information (CPC) broadcast for a plurality of subscriber stations (UE) from a first network-based radio station (BS), the information (CPC) containing organization information for a plurality of radio communication systems (2G, 3G, 4G, WLAN, WiMAX),
and
sends a message (UL REQ), **characterized in that** the message (UL REQ) indicates for each of the plurality of radio communication systems (2G, 3G, 4G, WLAN, WiMAX) the subscriber station inability to detect a signal required for connection setup.

3. Method according to Claim 1 or 2, in which the same radio frequency is used for the information (CPC) and the message (UL REQ).

4. Method according to Claim 3, in which the transmissions of the information (CPC) and the message (UL REQ) are separated from one another using a TDD method.

5. Method according to one of Claims 1 to 4, in which the message (UL REQ) comprises a statement indicating radio access technologies usable by the subscriber station (UE).

6. Method according to one of Claims 1 to 5, in which the first network-based radio station (BS) sends an acknowledgement message (ACK) to acknowledge receipt of the message (UL REQ) .

7. Method according to Claim 6, in which the same radio frequency is used for the acknowledgement message (ACK) and the information (CPC).

8. Method according to one of Claims 1 to 7, in which receipt of the message (UL REQ) is followed by a reconfiguration relating to at least one of the plurality of radio communication systems (2G, 3G, 4G, WLAN, WiMAX) taking place.

9. Method according to Claim 8, in which the reconfiguration comprises the addition of a radio access technology.

10. Method according to Claim 9, in which the added radio access technology is used to send software to the subscriber station (UE), this software allowing the subscriber station (UE) to use a radio access technology.

11. Method according to one of Claims 8 to 10, in which the reconfiguration comprises the beginning of the sending of a signal required for connection setup.

12. Method according to one of Claims 8 to 11, in which the first network-based radio station (BS) sends the information (CPC) again after the reconfiguration, the content of the information (CPC) matching the reconfiguration that has taken place.

13. Method according to one of Claims 1 to 12, in which the organization information respectively indicates the radio access technology used by the respective radio communication systems (2G, 3G, 4G, WLAN, WiMAX).

14. Method according to one of Claims 1 to 13, in which the organization information respectively indicates radio channel information of the respective signal required for the connection setup.

15. Method according to one of Claims 1 to 14, in which the message (UL REQ) is received by the first network-based radio station (BS) directionally.

16. Method according to Claim 15, in which the information (CPC) is broadcast by the first network-based radio station (BS) directionally, the directions of receipt of the message (UL REQ) and broadcast of the information (CPC) being geared to one another.

17. Method according to one of Claims 1 to 16, in which the subscriber station inability for each radio communication system (2G, 3G, 4G, WLAN, WiMAX) exists on account of a lack of equipment in a subscriber station (UE) or on account of a distance of the subscriber station (UE) from a network-based radio station sending the respective signal.

18. Network-based radio station (BS) for communication by radio, having
means for broadcasting information (CPC) for a plurality of subscriber stations (UE), the information (CPC) containing organization information for a plurality of radio communication systems (2G, 3G, 4G, WLAN, WiMAX),
and
means for receiving a message (UL REQ) from a subscriber station (UE), **characterized in that** the message (UL REQ) indicates for each of the plurality of radio communication systems (2G, 3G, 4G, WLAN, WiMAX) the subscriber station inability to detect a signal required for connection setup.

19. Subscriber station (UE) for communication by radio, having means of receiving information (CPC) broadcast by a network-based radio station (BS) for a plurality of subscriber stations (UE), the information (CPC) containing organization information for a plurality of radio communication systems (2G, 3G, 4G, WLAN, WiMAX),
and
means for sending a message (UL REQ), **characterized in that** the message (UL REQ) indicates for each of the plurality of radio communication systems (2G, 3G, 4G, WLAN, WiMAX) the subscriber station inability to detect a signal required for connection setup.

## Revendications

1. Procédé de communication radio, dans lequel une première station radio côté réseau (BS) émet des informations (CPC) pour une pluralité de stations d'usagers (UE), les informations (CPC) contenant des informations d'organisation d'une pluralité de systèmes de radiocommunication (2G, 3G, 4G, WLAN, WiMAX)
et
la première station radio côté réseau (BS) ou une autre station radio côté réseau reçoit un message (UL REQ) d'une station d'usager (UE),
**caractérisé en ce que** le message (UL REQ) affiche, pour chacun des systèmes de la pluralité de systèmes de radiocommunication (2G, 3G, 4G, WLAN, WiMAX), l'incapacité, côté station d'usager, à détecter un signal requis pour un établissement de liaison.

2. Procédé de communication radio, dans lequel une station d'usager (UE) reçoit des informations (CPC) émises par une première station radio côté réseau (BS) pour une pluralité de stations d'usagers (UE), les informations (CPC) contenant des informations d'organisation d'une pluralité de systèmes de radiocommunication (2G, 3G, 4G, WLAN, WiMAX),
et
émet un message (UL REQ),
**caractérisé en ce que** le message (UL REQ) affiche, pour chacun des systèmes de la pluralité de systèmes de radiocommunication (2G, 3G, 4G, WLAN, WiMAX), l'incapacité, côté station d'usager, à détecter un signal requis pour un établissement de liaison.

3. Procédé selon la revendication 1 ou 2, dans lequel la même fréquence radio est utilisée pour les informations (CPC) et le message (UL REQ) .

4. Procédé selon la revendication 3, dans lequel les transmissions des informations (CPC) et du message (UL REQ) sont séparées selon un procédé TDD.

5. Procédé selon l'une des revendications 1 à 4, dans lequel le message (UL REQ) inclut une mention de technologies d'accès radio utilisables par la station d'usager (UE).

6. Procédé selon l'une des revendications 1 à 5, dans lequel la première station radio côté réseau (BS) émet un message de confirmation (ACK) pour confirmer la réception du message (UL REQ) .

7. Procédé selon la revendication 6, dans lequel la même fréquence radio est utilisée pour le message de confirmation (ACK) et les informations (CPC).

8. Procédé selon l'une des revendications 1 à 7, dans lequel a lieu, après la réception du message (UL REQ), une reconfiguration concernant au moins l'un des systèmes de la pluralité de systèmes de radiocommunication (2G, 3G, 4G, WLAN, WiMAX) .

9. Procédé selon la revendication 8, dans lequel la reconfiguration inclut l'ajout d'une technologie d'accès radio.

10. Procédé selon la revendication 9, dans lequel un logiciel est envoyé à la station d'usager (UE) moyennant l'utilisation de la technologie d'accès radio ajoutée, ce logiciel permettant à la station d'usager (UE) d'utiliser une technologie d'accès radio.

11. Procédé selon l'une des revendications 8 à 10, dans lequel la reconfiguration inclut le début de l'envoi d'un signal requis pour un établissement de liaison.

12. Procédé selon l'une des revendications 8 à 11, dans lequel la première station radio côté réseau (BS) émet de nouveau les informations (CPC) après la reconfiguration, le contenu des informations (CPC) étant adapté à la reconfiguration effectuée.

13. Procédé selon l'une des revendications 1 à 12, dans lequel les informations d'organisation indiquent respectivement la technologie d'accès radio utilisée par le système de radiocommunication respectif (2G, 3G, 4G, WLAN, WiMAX).

14. Procédé selon l'une des revendications 1 à 13, dans lequel les informations d'organisation indiquent respectivement des informations de canal radio du signal respectif requis pour l'établissement de liaison.

15. Procédé selon l'une des revendications 1 à 14, dans lequel le message (UL REQ) est reçu par la première station radio côté réseau (BS) de manière orientée.

16. Procédé selon la revendication 15, dans lequel les informations (CPC) sont émises par la première station radio côté réseau (BS) de manière orientée, les directions de la réception du message (UL REQ) et de l'émission des informations (CPC) étant coordonnées entre elles.

17. Procédé selon l'une des revendications 1 à 16, dans lequel il y a, pour chaque système de radiocommunication (2G, 3G, 4G, WLAN, WiMAX), incapacité, côté station d'usager, en raison d'un défaut d'équipement de la station d'usager (UE) ou en raison d'une distance entre la station d'usager (UE) et une station radio côté réseau émettant le signal respectif.

18. Station radio côté réseau (BS) pour communication radio, comportant :
des moyens pour émettre des informations (CPC) pour une pluralité de stations d'usagers (UE), les informations (CPC) contenant des informations d'organisation d'une pluralité de systèmes de radiocommunication (2G, 3G, 4G, WLAN, WiMAX),
et
des moyens pour recevoir un message (UL REQ) d'une station d'usager (UE),
**caractérisée en ce que** le message (UL REQ) affiche, pour chacun des systèmes de la pluralité de systèmes de radiocommunication (2G, 3G, 4G, WLAN, WiMAX), l'incapacité, côté station d'usager, à détecter un signal requis pour un établissement de liaison.

19. Station d'usager (UE) pour communication radio, comportant :
des moyens pour recevoir des informations (CPC) émises par une station radio côté réseau (BS) pour une pluralité de stations d'usagers (UE), les informations (CPC) contenant des informations d'organisation d'une pluralité de systèmes de radiocommunication (2G, 3G, 4G, WLAN, WiMAX),
et
des moyens pour émettre un message (UL REQ),
**caractérisée en ce que** le message (UL REQ) affiche, pour chacun des systèmes de la pluralité de systèmes de radiocommunication (2G, 3G, 4G, WLAN, WiMAX), l'incapacité, côté station d'usager, à détecter un signal requis pour un établissement de liaison.
